(19) Europäisches Patentamt
European Patent Office
Office européen des brevets

(11) **EP 3 106 710 B1**

(12) **EUROPEAN PATENT SPECIFICATION**

(45) Date of publication and mention
of the grant of the patent:
**05.10.2022 Bulletin 2022/40**

(21) Application number: **15177373.6**

(22) Date of filing: **17.07.2015**

(51) International Patent Classification (IPC):
**F16F 15/04** (2006.01)     **F16F 7/10** (2006.01)

(52) Cooperative Patent Classification (CPC):
**F16F 7/1005; F16F 15/04;** F16F 15/06

(54) **VIBRATION ABSORBER DEVICE**

SCHWINGUNGSDÄMPFERVORRICHTUNG

DISPOSITIF AMORTISSEUR DE VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2015 EP 15172061**

(43) Date of publication of application:
**21.12.2016 Bulletin 2016/51**

(73) Proprietors:
• **Airbus Defence and Space GmbH
85521 Ottobrunn (DE)**
• **AIRBUS HELICOPTERS DEUTSCHLAND GmbH
86609 Donauwörth (DE)**

(72) Inventors:
• **Storm, Stefan
85716 Unterschleißheim (DE)**
• **Maier, Rudolf
83714 Miesbach (DE)**
• **Priems, Martijn
81243 München (DE)**

(74) Representative: **GPI Brevets
1330, rue Guillibert de la Lauzière
EuroParc de Pichaury
Bât B2
13856 Aix en Provence Cedex 3 (FR)**

(56) References cited:
**EP-A1- 2 072 653     EP-A2- 0 886 079
GB-A- 2 270 292     JP-A- H08 179 835
JP-B2- 3 122 101     US-B1- 6 462 635**

**Description**

The invention refers to a vibration absorber device according to the preamble of claim 1.

Lightweight constructions are used in aviation as well as aerospace technology and exhibit reduced stiffness. The required statical stiffness is achieved by frameworks or similar techniques. However, the dynamical stiffness is not always provided by the techniques used for achieving the statical stiffness. The reduced mass of the elements of the lightweight construction influences the dynamical stiffness behavior, i.e. the dynamical resilience is increased which leads to undesired vibrations in the construction.

Active devices (such as adaptive vibration absorber) may be used in order to reduce the vibrational oscillations in a dominant frequency range. However, it is often not sufficient to focus on one particular frequency range.

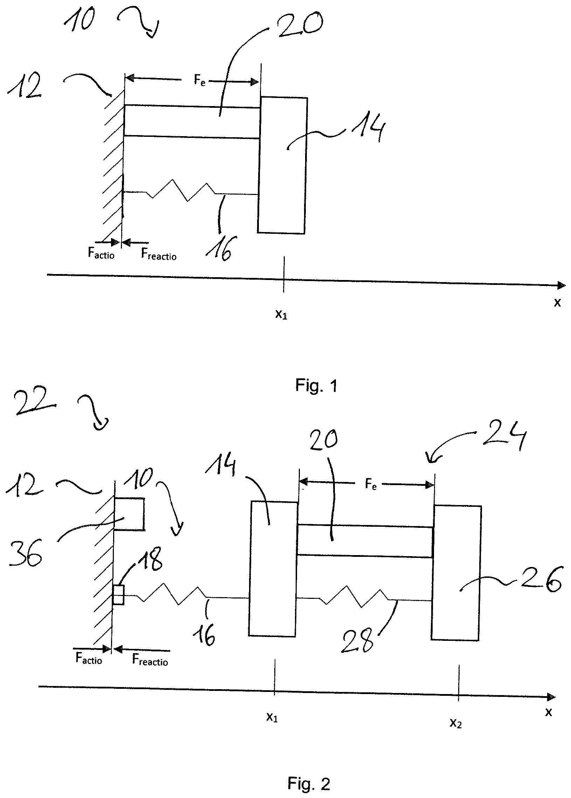

Conventional inertial force generator systems include a spring mass system that is coupled to an active element for generating a force/movement of an interial mass. These inertial force generator systems facilitate the reduction of

$$\omega_1 = \sqrt{\frac{k_1}{m_1}}$$

vibrations solely in the range of their own resonance frequency which is defined by the spring mass system . In order to reduce the vibrations in a further frequency range, it is necessary to provide a second spring mass system

$$\omega_2 = \sqrt{\frac{k_2}{m_2}}$$

having a resonance frequency . The second spring mass system requires the provision of a second active element. Each of the masses for generating forces can only be used for the respective frequency range of their resonance frequencies. Furthermore, the second active element requires its own energy supply which doubles the weight of the electronics compared to one spring mass system. For example, helicopters with four rotor blades have unwanted vibration at 27 Hz (four times the frequency of the rotor) and at 54 Hz (eight times the frequency of the rotor) and corresponding dynamical forces in the range of 800 N and 400 N, respectively. However, other multiples of the base frequency other than and 27 Hz and 54 Hz may be damped as well. The conventional adaptive vibration absorber (1 DOF) as for example schematically shown in Fig. 1 reduces solely the vibrations in the range of 27 Hz and comprises an inertial mass of 3.7 kg and a force generator producing 50 N (statical force). A second system for the range of 54 Hz would require an inertial mass of 0.9 kg and a force generator producing 18 N as well as an additional electronics.

A vibration absorber is described in EP 1 668 271 B1.

In EP 0 886 079 A2 a method and apparatus for vibration damping using a dynamic mass is described. The oscillation damper has a weight connected elastically to the elastic system by use of a controllable actuator which can be altered in length in one operating direction of the oscillation damper. One natural frequency of the oscillation damper is fixed by taking the natural frequency of the elastic system into consideration. A control controls the actuator. The natural frequency of the oscillation damper coincides with the natural frequency of the elastic system which has an oscillation-sensor whose output signal forms the input signal of the control.

In EP 2 072 653 A1 a washing machine is provided. The washing machine includes a housing, a tub disposed in the housing, a laundry drum rotatably mounted in the tub, and an antivibration device on the tub.

In GB 2 270 292 A a vibration preventing device for a lift is arranged such that a main rope is trained around a sheave of a hoisting motor and a deflector wheel disposed on the side of the sheave, the main rope is connected to the upper sides of a passenger cage and a counterweight, respectively, by a thimble rod spring through a thimble rod, a compensating rope is attached to the lower sides of the passenger cage and the counterweight by a thimble rod spring through a thimble rod and trained around a compensating pulley , and a counterweight includes a vibration damping means for suppressing a vibration mode caused by the rotation of the sheave and the compensating pulley. The counterweight preferably includes a plurality of mass members which are connected to each other by vibration damping means each composed of an elastic member and a damping member.

JP H08 - 179835 A describes a piezoelectric element and a piece of mass which are serially connected and fitted in a vibrating direction of a device as a damping object. When a frequency of the device is matched with the natural frequency of the spring mass system of the mass, the device is turned to a standstill state. By controlling the driving voltage of a piezoelectric element according to the concerning frequency, the spring constant of the piezoelectric element 2 is controlled and the natural frequencies of both the systems can be matched.

US 6 462 635 B1 relates to a resonant device comprising a mass/spring system composed of a main mass comprising at least one main mass element, and of at least one spring element. The device is one which comprises at least one additional mass comprising at least one additional mass element and a coupling device able to couple the additional mass to the main mass and to decouple it therefrom, so as to modify the tuning frequency of the device.

JP 3 122 101 B2 discloses a vibration absorber according to the preamble of claim 1.

Starting from this prior art, it is the objective of the invention to improve a vibration absorber device for absorbing vibration at two different frequency ranges whereby the vibration absorber has a low weight and simple structure.

The objective is solved by the vibration absorber device according to the invention of claim 1.

Preferred embodiments of the invention are described in the depending claims.

The actuator generates a force that acts between the first mass element and the second mass element.

The structure in the meaning of this invention can be any device or element that is subjected to vibration. In particular, the structure can be a component of an aircraft such as a helicopter. For example, the structure can be an engine, a component supporting the engine, a gearbox, or a component supporting a rotor of a helicopter.

The vibration absorber device preferably generates a force that is opposite to the deflection force occurring in the structure and caused by the vibration. In particular, the vibration in the structure causes a deflection of the structure that can be represented by a deflection force. The force generated by the vibration absorber device is opposite to this deflection force.

Preferably, the vibration absorber device is coupled to or comprises a sensor and/or a control circuit for detecting the frequency and magnitude of the vibration. The control circuit preferably controls the vibration absorber device such that the force generated by the vibration absorber device is opposite to the deflection force and has a phase offset.

Preferably, the base is configured to transfer the force generated by the vibration absorber device to the structure. The vibration absorber device can be attached to the structure by means of the base. The attachment of the vibration absorber device can be permanent or removable. For example, the base can be attached to the structure by means of fasteners such as bolts or screws. Alternatively, the base can be attached to the structure by welding or snap-fit connections.

The base and the first spring element can be separate devices that are fixed to each other. The attachment of the base to the first spring element can be permanent or removable. In particular, similar attachment means can be used as described for the attachment of the base to the structure. Alternatively, the base and the first mass element can form a unitary one-piece structure.

The first spring element and/or the second spring element preferably are elastic elements that are compressed or expanded when a force is acting on the spring element. The spring element may be constituted by an elastic material such as a polymer. Additionally or alternatively, the spring element may be constituted by a metallic or nonmetallic material.

The mass element may be regarded as any physical structure that has a certain mass. The mass of the mass element is preferably adjusted in conjunction with the spring constant of the spring element such that the resulting resonance frequency is in the frequency range of the vibrations to be absorbed. Hence, the mass of the mass elements and the spring constant of the spring elements may be adjusted to frequencies to be absorbed.

Preferably, the inertial masses of the vibration absorber device are solely constituted by the first mass element, the second mass element and the actuator.

Preferably, the first mass element and the second mass element have a cubical shape; however, any shape can be used for the mass elements as required and/or desired. For example, the shape of the first mass element and the second mass element can be adapted to the space requirements of the vibration absorber device.

The first spring element is connected between the base and the first element. Preferably, the first spring element is elastically deformed when the first mass element is moved relative to the base. The first spring element may be permanently or removably attached to the first mass element and/or the base. Alternatively, the first spring element abuts against the first mass element. Preferably, the first spring element also abuts against the base.

The second spring element is connected between the first mass element and the second mass element. In particular, the second spring element is arranged such that a relative movement of the first mass element with regard to the second mass element causes an elastic deformation of the second spring element. The second spring element may be permanently or removably attached to the first mass element and/or second mass element. Alternatively, the second spring element abuts against the first mass element and/or the second mass element.

The actuator may be called an active element. The actuator may be constituted by any device that is capable of producing a relative movement of the first mass element with regard to the second mass element. The actuator is preferably configured to move the first mass element relative to the second mass element in a periodical fashion such that the second mass element oscillates relative to the first mass element. It is noted that a relative movement between the first mass element and the second mass element is achieved such that the force generated by the actuator for moving the mass elements is introduced into the vibration absorber device differentially between the two mass elements.

In alternative preferred embodiment, the actuator may be constituted by any device that is capable of producing a force acting between the first mass element and the second mass element. The actuator is preferably configured to introduce the actuation force between the first mass element and the second mass element in a periodical fashion.

Preferably, the first mass element, the second mass element, the first spring element and the second spring element are arranged in series. Preferably, the first mass element and the second mass element are arranged in series and the actuator is arranged between the first mass element and/or the second mass element.

The vibration absorber device has two spring mass systems and, preferably, only one active element. Thus, the weight of the second active element and the required electronics for controlling the second active element can be saved with regard to the conventional design of the prior art. As a preferred advantage of the invention, the vibration absorber device has a simplified structure since only one active element (actuator) needs to be provided.

The actuator preferably generates a force for holding, moving, or braking the first mass element relative to the second mass element. The force may be introduced in a differential way such that it is not crucial whether the first mass element is actuated with regard to the second mass element or the other way around, but such that the first mass element is actuated relative to the second mass element. This corresponds to Newton's Third Law.

A further preferred advantage of the invention is that the force that is required to be generated by the actuator needs not to be increased with regard to the active elements of the prior art. Hence, conventional actuators can be used.

A further preferred advantage of the invention is that the mass of the actuator is a part of the inertial mass of the vibration absorber device such that the total weight of the vibration absorber device can be reduced, i.e. the first mass element and/or the second mass element can be constructed lighter with regard to the mass of the actuator.

A further preferred advantage of the invention is that the vibration absorber device needs only one contact point for attaching the vibration absorber device to the structure. Preferably, this is done via the base. Hence, the attachment of the vibration absorber device to the structure can be simplified compared to the provision of two separate spring mass systems of the prior art.

This configuration is especially preferred if a force generating actuator is employed. For example, the actuator uses the electrodynamic principle of a voice coil, for example a voice coil linear motor.

Preferably, the actuator is arranged between the first mass element and the second mass element in parallel to the second spring element. To this end, the actuator may be fixed to the first mass element and/or the second mass element. Alternatively, the actuator abuts the first mass element and/or the second mass element.

In a further embodiment, the actuator is attached to the second spring element. Upon activation of the actuator, the second spring element is deformed by the actuator moving the second mass element relative to the first mass element.

This has the preferred advantage that a separate means for supporting the actuator is not required since the actuator is supported by the first mass element and the second mass element. Hence, the overall weight of the vibration absorber device can be further reduced.

In this embodiment, the actuator is fixed to the second spring element in order to deform (which corresponds to the introduction of force) the second spring element for moving or actuating the first mass element relative to the second mass element. For example, the second spring element may be deflected by the actuator such that the second mass element oscillates relative to the first mass element. This has the preferred advantage that a separate means for supporting the actuator is not required since the actuator is solely fixed to the second spring element. Hence, the overall weight of the vibration absorber device can be further reduced.

The force generation may also be such that the first mass element is hold in its position relative to the second mass element by counteracting to other forces. Further, the force generation may be such that a braking force is generated for decelerating a relative movement between the first and second masses.

It is preferred that the second mass element is solely fixed to the second spring element and/or the actuator.

Preferably, the second mass element constitutes a free end. The second mass element can be only attached to the first mass element via the second spring element and/or the actuator. Hence, the second mass element may oscillate freely. This has the preferred advantage that a separate means for supporting the second mass element is not required leading to a reduced weight of the vibration absorber device. Additionally, the structural configuration of the vibration absorber device can be further simplified.

It is preferred that the actuator is connected between the first mass element and the second spring element and/or the actuator is connected between the second mass element and the second spring element.

This configuration is especially preferred if a displacement generating actuator is employed.

It is preferred that the actuator comprises a piezo-electrical element and/or an electromechanical element and/or a pneumatic element and/or a hydraulic element.

The preferred actuator comprises either solely a piezo-electric element or electromechanical element or a pneumatic element or a hydraulic element; alternatively, the actuator comprises a combination of the above mentioned elements. The configuration can be adapted to the space requirements or the vibration to be absorbed. An example of a piezo-electrical element is an actuator made of a piezo material, for example a piezo in conjunction with a membrane. Such actuators are known form the prior art.

It is preferred that the first spring element and/or the second spring element comprises a coil spring and/or a leaf spring and/or a plate spring.

Preferably, the first spring element and the second spring element are similar components. The first spring element and/or the second spring element are either made of a coil spring or a leaf spring or a plate spring; alternatively, the spring elements comprise a combination of the above-mentioned types of springs. The configuration of the first spring element and the second spring element can be adapted to the frequency of the vibrations to be absorbed, i.e. the size, form and material of the spring elements can be chosen such that the spring constant of the spring elements leads to a resonance frequency in the range of the vibrations to be absorbed. Furthermore, the space requirements may prefer the use of one of the above-described springs.

It is preferred that the spring constant of the first spring element is different to the spring constant of the second spring element.

Preferably, the first spring element and the second spring element are made of the same springs, but differ in their spring constants. This allows providing an identical first mass element and second mass element, further simplifying the configuration of the vibration absorber device.

It is preferred that the mass of the first mass element is different to the mass of the second mass element.

In this configuration, the first spring element and the second spring element can have identical spring constants, but the masses of the first mass element and the second mass element differ. Consequently, the resonance frequency of the first spring mass system differs from the resonance frequency of the second spring mass system.

The vibration absorber device comprises a guiding element which guides the movement of the first mass element and/or of the second mass element.

The guiding element may be fixed to the base. Alternatively, the guiding element can be separately attached to the structure. The guiding element is preferably provided such that the movement of the first mass element and/or the second mass element occurs only in one direction. The guiding element may be in gliding contact with the first mass element and/or the second mass element. For example, bearings or surfaces with reduced friction can be used for guiding the first mass element and/or the second mass element. The guiding element may comprise a first guide element for guiding the first mass element and a second guiding element for guiding the second mass element. The first guiding element and the second guiding element may be separate elements.

It is preferred that the guiding element is configured such that the first mass element and/or the second mass element move in a linear direction.

Preferably, the linear direction is parallel to the deflection of the structure caused by the vibration occurring in a structure. Hence, the absorption efficiency of the vibration absorber device can be increased. In this preferred embodiment, the first mass element and the second mass element move in the same direction. As a preferred advantage, the spatial dimensions of the vibration absorber device can be reduced.

The guiding element is constituted by at least two springs that are arranged in parallel. Preferably the guiding element is constituted by at least two springs that are leaf springs or plate springs.

Preferably, the guiding of the first mass element and the second mass element can be achieved by the provision of a spring element that comprises parallel arranged springs, in particular leaf springs or plate springs. Alternatively, the at least two springs are arranged in addition to the first and/or second spring element. This has the preferred advantage that no friction between the first and/or second mass elements and the guiding element occurs. The two parallel arranged spring elements preferably support the mass elements such that they move in a linear direction irrespective of the deflection of the first and/or second mass element. A further preferred advantage is that the provision of the at least two springs counteract vibrations of the first mass element or the second mass element in a direction perpendicular to the linear direction.

As a further alternative configuration for the guiding of the mass elements is that a third spring element can be arranged between the second mass element and the structure. The third spring element preferably is constituted similar to the first spring element and/or second spring element as described above. The configuration has the preferred advantage that no friction between the first and/or second mass elements and the guiding elements occur

It is preferred that a control unit is provided which controls the actuation of the actuator based on the vibration detected by the vibration sensor.

The vibration sensor detects the vibration that occurs in the structure. The vibration sensor may be a vibration sensor as known in the prior art.

The control unit controls the actuation of the actuator based on the vibration detected using the vibration sensor. For example, a closed loop control circuit may be employed in the control unit in order to minimize the vibration in the structure. Such control units are known in the prior art.

A further aspect of the invention refers to an aircraft, in particular a helicopter, that comprises a structure and a vibration absorber device as discussed above.

The vibration absorber device is attached to the structure.

All the descriptions and considerations described above equally apply to the aircraft.

It is preferred that the vibration absorber device is attached to the structure by means of the base.

A preferred embodiment of the invention will be discussed with regard to the attached drawings wherein

Fig. 1 shows a schematical representation of a mass spring system according to the prior art;

Fig. 2 shows a schematical representation of the vibration absorber device according to the invention;

Fig. 3 shows another schematical representation of the vibration absorber device; and

Fig. 4 shows the absorption characteristics of the vibration absorber device.

Fig. 1 shows a first spring mass system according to the prior art. The first spring mass system comprises a structure 12 that vibrates, a first mass element 14, a first spring element 16, and an actuator 20. The first mass element 14 is elastically coupled to the structure 12 by the first spring element 16. The actuator 20 moves the first mass element 14 with regard to the structure 12 along a direction x. In particular, the actuator 20 produces an actuation force $F_e$ that induces an oscillation of the first mass element 14 around a resting position $x_1$. Due to the oscillation of the first mass element 14 around the resting position, a force $F_{reactio}$ is transferred to the structure 12 in order to absorb the deflection force $F_{actio}$ caused by the vibration of the structure 12. The resonance frequency of the first mass element 14 $\omega_1$ equals

$\sqrt{\dfrac{k_1}{m_1}}$ whereby m1 is the mass of the first mass element14 and $k_1$ is the spring constant of the first spring element 16. Hence, frequencies of the structure 12 in the range of the resonance frequency $\omega_1$ can be cancelled by the first spring mass system.

The force generated by the first spring mass system 10 is $F_{reactio} = - k_1 * x_1$, whereby $x_1$ is the difference between the current position of the first mass element 14 and the its resting position.

Fig. 2 shows a vibration absorber device 22 which comprises a first mass spring system 10 and a second mass spring system 24. As discussed above, the first mass spring system 10 comprises a first mass element 14 and a first spring element 16. The first spring element 16 is attached to the structure 12 via a base 18. The first mass element 14 oscillates around its resting position.

The second spring mass system 24 comprises a second mass element 26 and a second spring element 28. The second spring mass system 24 has a spring constant k2 of the second spring element 28 and the mass of the second mass element 26 is m2.

The oscillation frequency of the whole vibration absorber device 22 is:

$$\omega_{1,2}^2 = \frac{1}{2}(\omega_{01}^2 + \omega_{02}^2) \pm \sqrt{\frac{1}{4}(\omega_{01}^2 - \omega_{02}^2)^2 + \omega_{12}^2\omega_{21}^2},$$

wherein

$$\omega_{01}^2 = \frac{k_1+k_2}{m_1}, \ \omega_{12}^2 = -\frac{k_2}{m_1}, \ \omega_{21}^2 = -\frac{k_2}{m_2}, \text{ and } \omega_{02}^2 = \frac{k_2}{m_2}.$$

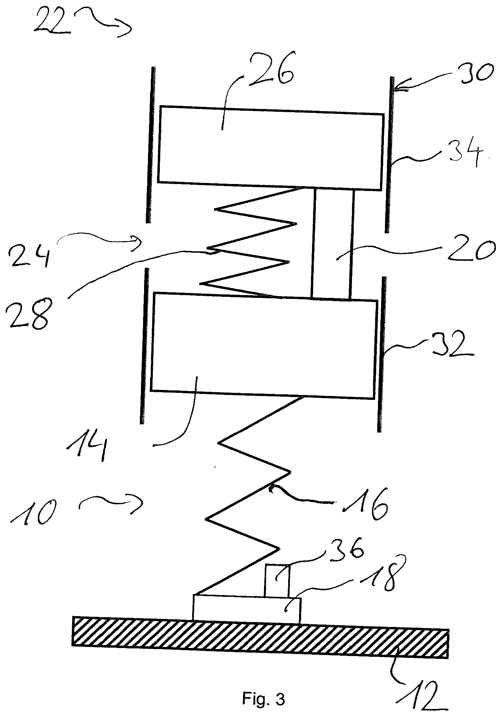

The vibration absorber device 22 further comprises a vibration sensor 36 and a control unit (not shown). The vibration sensor 36 detects the vibration of the structure 12. To this end, the vibration sensor is directly attached to the structure 12 (see Fig. 2) or is attached to the base 18 (see Fig. 3). The control unit controls the actuation of the actuator 22 based on the vibration detected by the vibration sensor 36. The control unit comprises a closed loop control circuit that minimizes the vibration occurring in the structure 12.

In the embodiment shown in Fig. 2, the first mass element 14 and the second mass element 26 oscillate in the same linear direction x. The movement of the second mass element 26, relative to the first mass element 14, is generated between the first mass element 14 and the second mass element 26. Due to the actuation force Fe, the first mass element 14 is moved relative to the second mass element 26. The first spring mass system 10 and the second spring mass system 24 generate a total force Freactio that is opposite of the deflection force Factio generated by the vibration of the structure 12.

The force generated by the second mass system 24 is F2 = - $k_2$ * $x_2$ whereby $x_2$ is the difference between the current position of the second mass element 26 and the its resting position. The force generated by the first mass system 10 is F1 = - $k_1$ * $x_1$ + $k_2$ * ($x_2$- $x_1$). Thus, the total force generated by the vibration absorber device 22 is Freactio = - ($F_1$ + $F_2$). It is noted that the actuator 20 generates an actuation force Fe of the same magnitude in the spring mass system 10 of Fig. 1 and the vibration absorber device of Fig. 2 while the total generated force differs considerably.

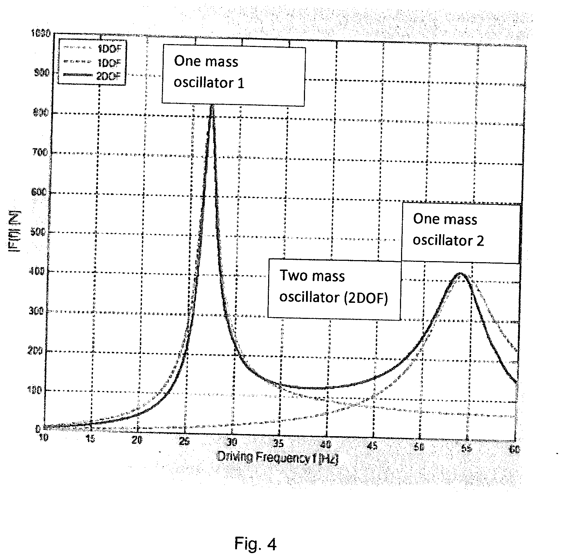

The vibration absorber device 22 has two resonance frequencies as shown in Fig. 4. The resonance frequencies are similar to resonance frequencies $\omega_1$, $\omega_2$ of the first spring mass system 10 and of the second spring mass system 24, respectively, when both spring mass systems would have been arranged separately. In comparison to using two separate spring mass systems, only one actuator 20 is required whereby similar damping characteristics are generated, as can be seen from Fig. 4.

Fig. 3 shows an alternative configuration of the vibration absorber device 22 with regard to the one shown in Fig. 2. There, the same elements are labelled with the same reference signs. Additionally, a guide element 30 is shown. The guide element 30 comprises a first guide element 32 for guiding the movement of the first mass element 14 and a second guide element 34 for guiding the movement of the second mass element 26. The first guide element 32 is provided separately from the second guide element 34. The first guide element 32 and the second guide element 34 are attached to the structure 12 (not shown in Fig. 3). The first guide element 32 and the second guide element 34 have a surface facing the mass elements 14 and 26 with reduced friction, such that the first mass element 14 and the second mass element 26 are able to glide on thinner surfaces of the first guide element 32 and the second guide element 34, respectively.

**List of References**

| | |
|---|---|
| 10 | first mass spring system |
| 12 | structure |
| 14 | first mass element |
| 16 | first spring element |
| 18 | base |
| 20 | actuator |
| 22 | vibration absorber device |
| 24 | second spring mass system |
| 26 | second mass element |
| 28 | second spring element |
| 30 | guide element |
| 32 | first guide element |
| 34 | second guide element |
| 36 | vibration sensor |

| | |
|---|---|
| $F_e$ | actuation force |
| $k_1$ | spring constant of the first spring element |
| $k_2$ | spring constant of the second spring element |
| $m_1$ | mass of the first mass element |
| $m_2$ | mass of the second mass element |
| x | direction |

**Claims**

1. Vibration absorber device (22) configured for being part of an aircraft and configured for generating a force for absorbing vibration in a structure (12) of the aircraft, the vibration absorber device (22) comprising

   a base (18) for attaching the vibration absorber device (22) to the structure (12),
   a first mass element (14),
   a second mass element (26),
   a first spring element (16) connected between the base (18) and the first mass element (14),
   a second spring element (28) connected between the first mass element (14) and the second mass element (26),
   an actuator (20) configured to introduce an actuation force ($F_e$) between the first mass element (14) and the second mass element (26) in such a manner that the actuator (20) moves the first mass element (14) relative to the second mass element (26), wherein the actuator (20) is connected between the first mass element (14) and the second mass element (26), and
   a vibration sensor (36) which is directly attachable to the structure (12) or which is attached to the base (18) for detecting the vibration of the structure (12),
   wherein the actuator (20) is solely fixed to the first mass element (14) and the second mass element (26) or the actuator (20) is solely fixed to the second spring element (28),
   **characterized by** a guiding element (30) which guides the movement of the first mass element (14) and/or of the second mass element (26), wherein the guiding element (30) is constituted by at least two springs that are arranged in parallel

**2.** Vibration absorber device (22) according to claim 1, **characterized in that** the second mass element (26) is solely fixed to the second spring element (28) and the actuator (20).

**3.** Vibration absorber device (22) according to one of the preceding claims, **characterized in that** the actuator (20) comprises a piezo-electrical element and/or an electromechanical element and/or a pneumatic element and/or a hydraulic element.

**4.** Vibration absorber device (22) according to one of the preceding claims, **characterized in that** the first spring element (16) and/or the second spring element (28) comprises a coil spring and/or a leaf spring and/or a plate spring.

**5.** Vibration absorber device (22) according to one of the preceding claims, **characterized in that** the spring constant ($k_1$) of the first spring element (16) is different to the spring constant ($k_2$) of the second spring element (28).

**6.** Vibration absorber device (22) according to one of the preceding claims, **characterized in that** the mass ($m_1$) of the first mass element (14) is different to the mass ($m_2$) of the second mass element (26).

**7.** Vibration absorber device (22) according to one of the preceding claims, **characterized in that** the guiding element (30) is configured such that the first mass element (14) and/or the second mass element (26) move in a linear direction (x).

**8.** Vibration absorber device (22) according to one of the preceding claims, **characterized in that** the guiding element (30) is constituted by at least two springs that are leaf springs or plate springs.

**9.** Vibration absorber device (22) according to one of the preceding claims, **characterized in that** a control unit is provided which controls the actuation of the actuator (20) based on the vibration detected by the vibration sensor (36).

**Patentansprüche**

**1.** Schwingungsdämpfervorrichtung (22), die konfiguriert ist, um Teil eines Flugzeugs zu sein, und die konfiguriert ist, um eine Kraft zur Dämpfung von Schwingungen in einer Struktur (12) des Flugzeugs zu erzeugen, wobei die Schwingungsdämpfervorrichtung (22) umfasst:

eine Basis (18) zum Befestigen der Schwingungsdämpfervorrichtung (22) an der Struktur (12),
ein erstes Massenelement (14),
ein zweites Massenelement (26),
ein erstes Federelement (16), das zwischen der Basis (18) und dem ersten Massenelement (14) verbunden ist,
ein zweites Federelement (28), das zwischen dem ersten Massenelement (14) und dem zweiten Massenelement (26) verbunden ist,
einen Aktuator (20), der konfiguriert ist, um eine Betätigungskraft ($F_e$) zwischen dem ersten Massenelement (14) und dem zweiten Massenelement (26) derart einzuleiten, dass der Aktuator (20) das erste Massenelement (14) relativ zu dem zweiten Massenelement (26) bewegt, wobei der Aktuator (20) zwischen dem ersten Massenelement (14) und dem zweiten Massenelement (26) verbunden ist, und
einen Schwingungssensor (36), der direkt an der Struktur (12) oder an der Basis (18) zur Erfassung der Schwingung der Struktur (12) befestigbar ist, wobei der Aktuator (20) allein an dem ersten Massenelement (14) und dem zweiten Massenelement (26) oder der Aktuator (20) allein an dem zweiten Federelement (28) befestigt ist, **gekennzeichnet durch** ein Führungselement (30), das die Bewegung des ersten Massenelements (14) und/oder des zweiten Massenelements (26) führt, wobei das Führungselement (30) durch mindestens zwei parallel angeordnete Federn gebildet ist.

**2.** Schwingungsdämpfereinrichtung (22) nach Anspruch 1, **dadurch gekennzeichnet, dass** das zweite Massenelement (26) allein an dem zweiten Federelement (28) und dem Aktuator (20) befestigt ist.

**3.** Schwingungsdämpfervorrichtung (22) nach einem der vorhergehenden Ansprüche, **dadurch gekennzeichnet, dass** der Aktuator (20) ein piezoelektrisches Element und/oder ein elektromechanisches Element und/oder ein pneumatisches Element und/oder ein hydraulisches Element umfasst.

**4.** Schwingungsdämpfervorrichtung (22) nach einem der vorhergehenden Ansprüche,

**dadurch gekennzeichnet, dass** das erste Federelement (16) und/oder das zweite Federelement (28) eine Schraubenfeder und/oder eine Blattfeder und/oder eine Tellerfeder umfasst.

5. Schwingungsdämpfervorrichtung (22) nach einem der vorhergehenden Ansprüche, **dadurch gekennzeichnet, dass** die Federkonstante ($k_1$) des ersten Federelements (16) von der Federkonstante ($k_2$) des zweiten Federelements (28) verschieden ist.

6. Schwingungsdämpfer (22) nach einem der vorhergehenden Ansprüche, **dadurch gekennzeichnet, dass** die Masse ($m_1$) des ersten Massenelements (14) von der Masse ($m_2$) des zweiten Massenelements (26) verschieden ist.

7. Schwingungsdämpfervorrichtung (22) nach einem der vorhergehenden Ansprüche, **dadurch gekennzeichnet, dass** das Führungselement (30) derart konfiguriert ist, dass sich das erste Massenelement (14) und/oder das zweite Massenelement (26) in einer linearen Richtung (x) bewegt.

8. Schwingungsdämpfervorrichtung (22) nach einem der vorhergehenden Ansprüche, **dadurch gekennzeichnet, dass** das Führungselement (30) aus mindestens zwei Federn besteht, die Blattfedern oder Tellerfedern sind.

9. Schwingungsdämpfervorrichtung (22) nach einem der vorhergehenden Ansprüche, **dadurch gekennzeichnet, dass** eine Steuereinheit vorgesehen ist, die die Betätigung des Aktuators (20) auf der Grundlage der vom Schwingungssensor (36) erfassten Schwingung steuert.

**Revendications**

1. Dispositif (22) amortisseur de vibrations configuré pour faire partie d'un aéronef et configuré pour générer une force afin d'amortir les vibrations dans une structure (12) de l'aéronef, le dispositif (22) amortisseur de vibrations comprenant :

une base (18) pour fixer le dispositif (22) amortisseur de vibrations sur la structure (12),
un premier élément (14) formant masse,
un second élément (26) formant masse,
un premier élément (16) formant ressort raccordé entre la base (18) et le premier élément (14) formant masse,
un second élément (28) formant ressort raccordé entre le premier élément (14) formant masse et le second élément (26) formant masse,
un actionneur (20) configuré pour transmettre une force d'actionnement ($F_e$) entre le premier élément (14) formant masse et le second élément (26) formant masse de manière que l'actionneur (20) déplace le premier élément (14) formant masse par rapport au second élément (26) formant masse, dans lequel l'actionneur (20) est raccordé entre le premier élément (14) formant masse et le second élément (26) formant masse, et
un capteur (36) de vibrations qui peut être directement fixé sur la structure (12) ou qui est fixé sur la base (18) afin de détecter les vibrations de la structure (12), dans lequel l'actionneur (20) est fixé uniquement sur le premier élément (14) formant masse et sur le second élément (26) formant masse ou bien l'actionneur (20) est fixé uniquement sur le second élément (28) formant ressort,
**caractérisé en ce qu'**un élément de guidage (30) est prévu pour guider le déplacement du premier élément (14) formant masse et/ou du second élément (26) formant masse, dans lequel l'élément de guidage (30) est constitué d'au moins deux ressorts qui sont agencés en parallèle.

2. Dispositif (22) amortisseur de vibrations selon la revendication 1, **caractérisé en ce que** le second élément (26) formant masse est fixé uniquement sur le second élément (28) formant ressort et sur l'actionneur (20).

3. Dispositif (22) amortisseur de vibrations selon l'une quelconque des revendications précédentes, **caractérisé en ce que** l'actionneur (20) comprend un élément piézo-électrique et/ou un élément électromécanique et/ou un élément pneumatique et/ou un élément hydraulique.

4. Dispositif (22) amortisseur de vibrations selon l'une quelconque des revendications précédentes, **caractérisé en ce que** le premier élément (16) formant ressort et/ou le second élément (28) formant ressort comprend un ressort hélicoïdal et/ou un ressort à lames et/ou un ressort plat.

5. Dispositif (22) amortisseur de vibrations selon l'une quelconque des revendications précédentes, **caractérisé en**

**ce que** la constante de rappel ($k_1$) du premier élément (16) formant ressort (16) est différente de la constante de rappel ($k_2$) du second élément (28) formant ressort.

6. Dispositif (22) amortisseur de vibrations selon l'une quelconque des revendications précédentes, **caractérisé en ce que** la masse ($m_1$) du premier élément (14) formant masse est différente de la masse ($m_2$) du second élément (26) formant masse.

7. Dispositif (22) amortisseur de vibrations selon l'une quelconque des revendications précédentes, **caractérisé en ce que** l'élément de guidage (30) est configuré de sorte que le premier élément (14) formant masse et/ou le second élément (26) formant masse se déplacent suivant une direction linéaire (x).

8. Dispositif (22) amortisseur de vibrations selon l'une quelconque des revendications précédentes, **caractérisé en ce que** l'élément de guidage (30) est constitué d'au moins deux ressorts qui sont formés de ressorts à lames ou de ressorts plats.

9. Dispositif (22) amortisseur de vibrations selon l'une quelconque des revendications précédentes, **caractérisé en ce qu'**une unité de commande est prévue pour commander l'actionnement de l'actionneur (20) sur la base des vibrations détectées par le capteur (36) de vibrations.

Fig. 1

Fig. 2

Fig. 3

Fig. 4

**REFERENCES CITED IN THE DESCRIPTION**

**Patent documents cited in the description**

- EP 1668271 B1
- EP 0886079 A2
- EP 2072653 A1
- GB 2270292 A
- JP H08179835 A
- US 6462635 B1
- JP 3122101 B